# EUROPEAN PATENT APPLICATION

(11) **EP 2 079 152 A2**
(43) Date of publication of application: **15.07.2009**
(21) Application number: 09250005.7
(22) Date of filing: 03.01.2009
(51) Int. Cl.: H02K 5/26

(54) **Mounting arrangement for an electrical generator**

(30) Priority: 11.01.2008 US 20441 P
(71) Applicant: Goodrich Corporation, Charlotte, North Carolina 28217 (US)
(72) Inventor: Katcher, Thomas Edward, Euclid, OH 44123 (US)
(74) Representative: Bailey, Richard Alan

(57) **Abstract**

A mounting arrangement is disclosed for use in mounting a device (10) having a drive shaft (16) to a housing (14), the housing (14) having a flange (26) formed thereon, the mounting arrangement comprising a first flange (24) provided on the device (10) and securable to the flange (26) provided on the housing (14), the first flange (24) having a centreline, the drive shaft (16) of the device (10) having an axis of rotation (18) which is offset from the centreline. A device incorporating such a mounting arrangement is also described.

## Description

This invention relates to a mounting arrangement for use in the mounting of a device having a rotatable drive shaft to a housing containing a drive output to permit the drive shaft of the device to be driven by the drive output. For example, the mounting arrangement may be used in the mounting of aircraft engine accessories, for example electrical generators, to an engine gearbox, but it may be used in other applications including the mounting of pumps to motors or gearboxes, and the mounting of gearboxes to motors.

Mounting arrangements used in the mounting of electrical generators and other accessories to an aircraft engine gearbox typically include using a V-band type retention device to secure a flange of circular peripheral shape formed on the housing of the generator or other accessory to a similar flange provided on the gearbox housing. V-band devices are preferred over a bolted flange design as they allow accessories to be mounted and removed relatively quickly and simply. Typically, the generator or other accessory is formed with an upstanding pilot portion of generally cylindrical shape which fits into a correspondingly shaped recess formed in or on the gearbox housing. The flanges, upstanding pilot portion and corresponding recess are all formed concentrically with a drive shaft of the generator or other accessory. In use, the torque applied to the drive shaft is reacted through the housing of the generator or other accessory, and through the mounting arrangement to the gearbox housing. One advantage of the V-band type retention device when compared with a bolted flange design that is used on some accessory mounting arrangements is that there is the potential for the accessory to be displaced in a rotational direction relative to the gearbox housing under the reaction of the drive shaft torque. In order to prevent this rotational displacement and enhance the capability of the mounting arrangement to transmit the drive shaft torque, it is usual to incorporate anti-rotation pins or studs into one of the flanges to co-operate with openings or recesses provided in the other of the flanges. However, the use of anti-rotation pins or studs to enhance the torque transmitting capability of the mounting arrangement results in the torque being reacted over only a relatively small part of both of the flanges, particularly if, as is typically the case, only one or two such pins are provided. This concentration of loading in both of the flanges is undesirable.

It is an object of the invention to provide a mounting arrangement in which the disadvantages of the V-band type retention device set out hereinbefore are of reduced effect.

According to the present invention there is provided a mounting arrangement for use in mounting a device having a drive shaft to a housing, the housing having a flange formed thereon, the mounting arrangement comprising a first flange provided on the device and securable to the flange provided on the housing, the first flange having a centreline, the drive shaft of the device having an axis of rotation which is offset from the centreline.

The first flange is conveniently of circular or substantially circular peripheral shape, the axis of rotation being eccentric to the first flange.

It will be appreciated that in such an arrangement the torque reacted through the mounting arrangement, in use, is centred upon the axis of rotation rather than the centreline of the flange, and as a consequence the torque transmitting capability of the mounting arrangement is enhanced even if no anti-rotation pins or the like are provided.

Preferably the device is provided with a first projecting pilot formation of generally cylindrical shape receivable within a corresponding recess provided in the housing. The first pilot formation is preferably concentric with the centreline of the first flange and is thus offset from the axis of rotation.

A second projecting pilot formation of generally cylindrical shape may be provided, the second pilot formation being receivable within a corresponding recess provided in the housing. The second pilot formation is conveniently co-axial with the axis of rotation of the drive shaft.

The second pilot formation may project from within the first pilot formation. Alternatively, the first pilot formation may project from within the second pilot formation.

A V-band retention device may be used to secure the flanges to one another.

One or more drain passages may open onto the first pilot formation, preferably opening at or adjacent a point thereof furthest from the axis of rotation. As a result, the provision of separate seals for the one or more drain passages can be avoided.

The invention further relates to a device incorporating a mounting arrangement as defined hereinbefore. The device may comprise an electrical generator or other accessory for mounting on an aircraft engine gearbox.

The invention will further be described, by way of example, with reference to the accompanying drawings, in which:
Figures 1 and 2 are side and end views of an accessory device incorporating a prior art bolted flange arrangement;
Figures 1a and 2a are side and end views of an accessory device incorporating a prior art V-band flange mounting arrangement;
Figures 3 and 4 are views similar to Figures 1 and 2 illustrating an accessory device incorporating a V-band flange mounting arrangement according to one embodiment of the invention; and
Figures 5 and 6 are views similar to Figures 3 and 4 illustrating a second embodiment of the invention.

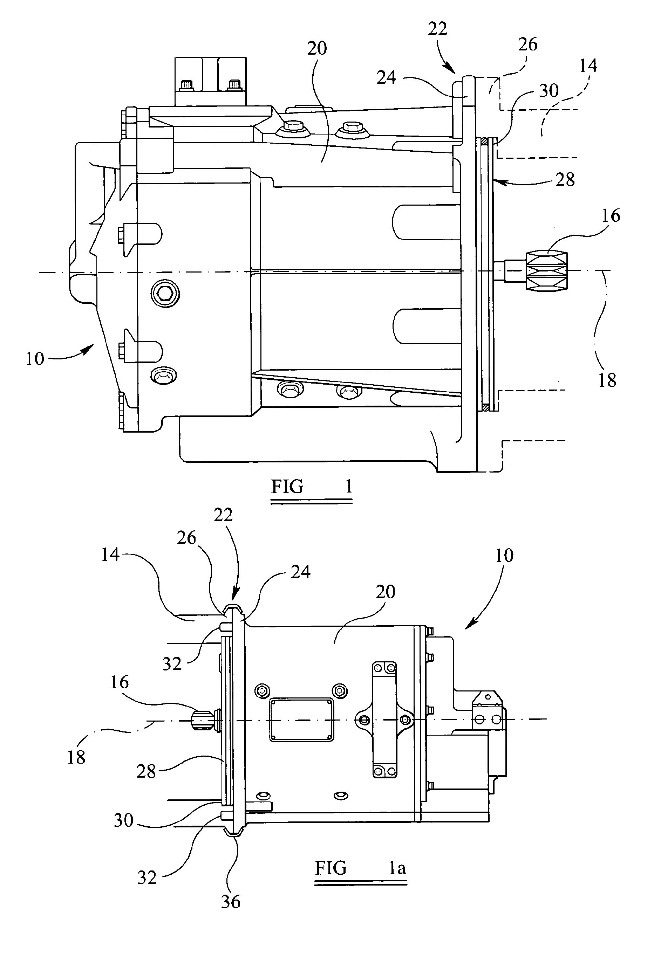

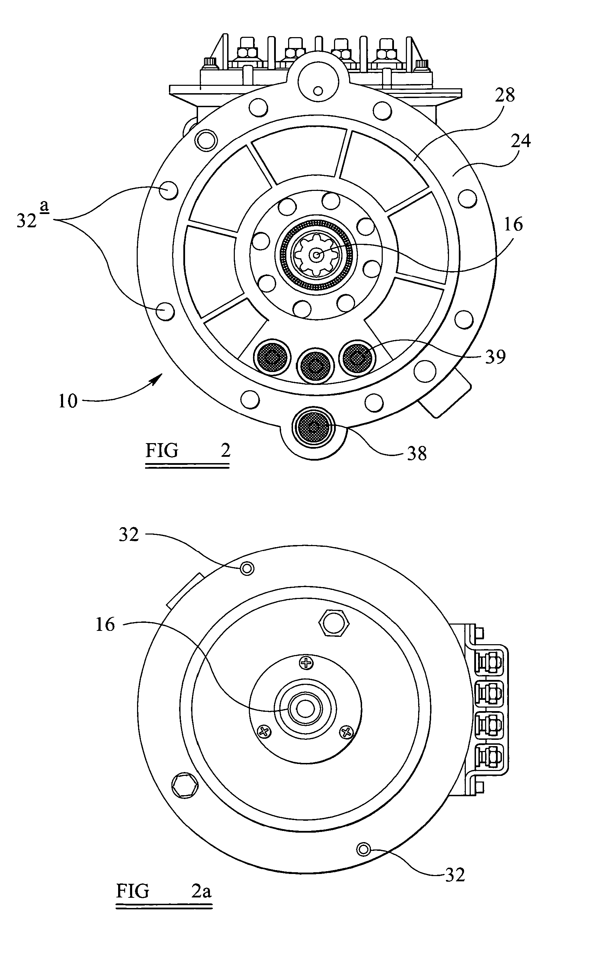

Figures 1a and 2a illustrate an accessory device 10 in the form of an electrical generator mounted upon a housing 14 of an aircraft engine gearbox. Although the illustrated accessory device 10 takes the form of an electrical generator, it will be appreciated that it could take a range of alternative forms. The nature of operation of the accessory device 10 is not of relevance to the present invention save to say that the accessory device 10 incorporates a drive shaft 16 which, in use, is driven for rotation about an axis of rotation 18 by a drive output of the aircraft engine gearbox. The torque applied to the drive shaft 16 is reacted by the housing 20 of the accessory device 10, the torque being transmitted to the gearbox housing 14 through a mounting arrangement 22.

The mounting arrangement 22 comprises a first flange 24 of generally circular outer periphery formed on the housing 20 and a second flange 26 of similar shape provided on the gearbox housing 14. The flanges 24, 26 are arranged to abut one another and to be secured to one another by a V-band retention device 36. A pilot projection 28 of generally cylindrical form projects from the first flange 24 and is received within a correspondingly shaped recess 30 formed in the second flange 26. It will be appreciated that the flanges 24, 26 are centred upon the axis of rotation 18 of the drive shaft 16.

In use, the reaction to the torque applied by the drive shaft 16 tends to cause the housing 20 to rotate relative to the gearbox housing 14 about the axis of rotation 18. In order to counter such rotation, the flange 26 is provided with a series of anti-rotation pins 32 which are received within corresponding openings formed in the flange 24.

As described hereinbefore, such an arrangement has the disadvantage that the torque is not reacted uniformly about the mounting arrangement 22 but rather is reacted at the points of engagement of the anti-rotation pins 32 with the corresponding openings or recesses formed in the flange 24.

Figures 1 and 2 illustrate a similar arrangement but in which the flanges 24, 26 are provided with openings 32a which align, in use, allowing the flanges 24, 26 to be bolted to one another in use to secure the device 10 in position instead of using a V-band retention device.

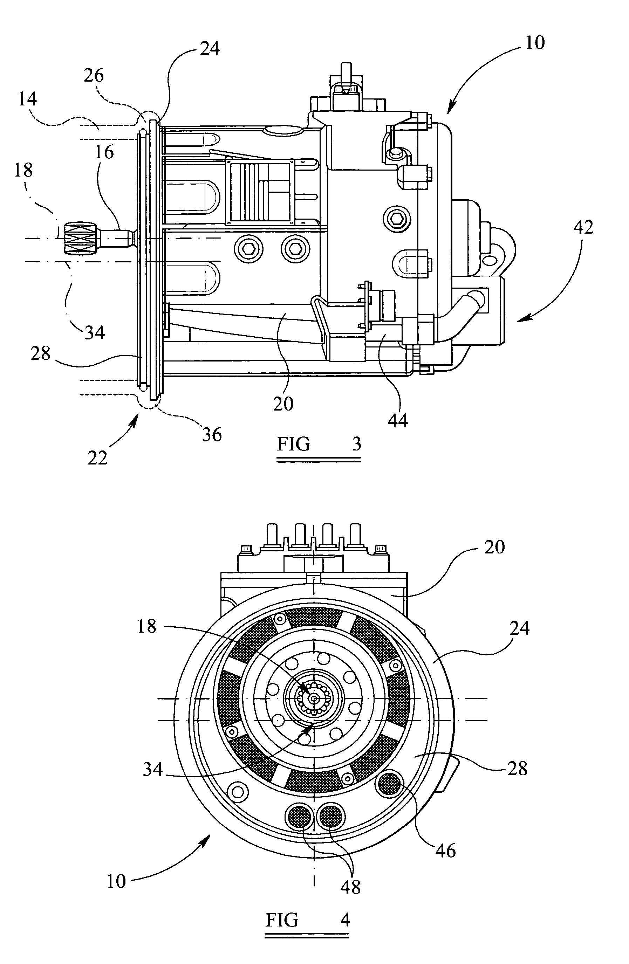

In accordance with a first embodiment of the invention, as illustrated in Figures 3 and 4, the flange 24 of the housing 20 is centred upon a centreline 34 that is offset from the axis of rotation 18 of the shaft 16. Such eccentric positioning of the axis of rotation 18 of the shaft 16 relative to the first flange 24 results in the reacted torque no longer simply forcing the housing 20 to rotate relative to the gearbox housing 14 about the centreline 34 of the flange 24. There is now a component of the resultant reaction torque that forces the centreline 34 of the flange 24 to be displaced radially. Consequently with a V-band retention device 36 used to secure the accessory device 10 to the gearbox housing 14, radial displacement of the centreline 34 forces the periphery of the flange 24 against the V-band retention device 36, thus resisting rotational displacement of the accessory device 10 relative to the gearbox housing 14 and enhancing the torque transmitting capability of the mounting arrangement 22 without requiring the provision of anti-rotation pins or the like.

As with the arrangement illustrated in Figures 1a and 2a, the accessory device 10 of the arrangement shown in Figures 3 and 4 includes a first projecting pilot formation 28 arranged to be received by a corresponding recess 30 provided in the gearbox housing 14. As illustrated in Figures 3 and 4, the first pilot formation 28 is conveniently concentric with the first flange 24, and thus eccentric to the axis of rotation 18 of the drive shaft 16. It will be appreciated that the eccentric positioning of the first pilot formation 28 relative to the axis of rotation of the drive shaft 16 forces the periphery of the pilot against the shaped recess 30 formed in the second flange 26 and hence further enhances the torque transmitting capability of the mounting arrangement 22. Compared to conventional concentric mounting arrangements, this eccentric mounting arrangement provides for improved loading distribution and reduced stress levels which may allow weight savings to be made in the design of the accessory device 10 and the gearbox housing 14.

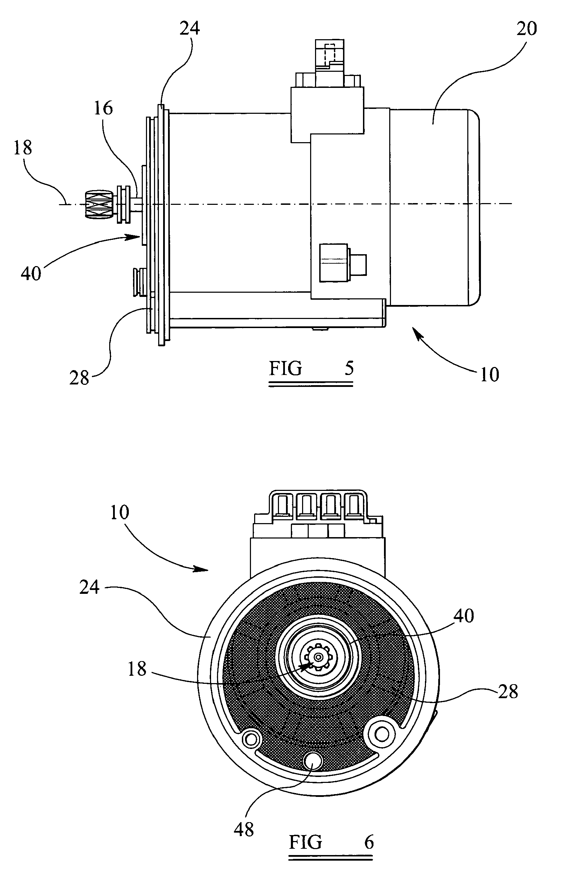

The arrangement illustrated in Figures 5 and 6 is similar to that of Figures 3 and 4 but additionally includes a second projecting pilot formation 40 which is located concentrically with the drive shaft 16 and received, in use, within a correspondingly shaped and positioned recess (not shown) formed in the gearbox housing 14. It is usual for a clearance to be formed between the first pilot formation 28 and the corresponding recess 30 of the gearbox 14 to enable assembly of the accessory device 10 to the gearbox 14. By providing a second pilot formation 40, the clearance between this pilot formation 40 and the corresponding recess can be of smaller dimensions thus constraining the accessory device 10 against radial displacement relative to the gearbox housing 14, thus further enhancing the integrity of the mounting arrangement 22. The provision of the second pilot formation 40 is thought to be particularly advantageous when used with accessory devices of the type in which the applied torque levels vary over time or in which reversing of the direction of the applied torque occurs over time. Such reversing torque levels are typically exhibited on aircraft starter-generator units.

In each of the arrangements described and illustrated the accessory device 10 takes the form of an electrical generator. Electrical generators typically incorporate an oil cooling arrangement in which cooling oil is sprayed upon parts of the generator, in use. It is known to provide a scavenge pump either separate to or integrated into the design of the generator, in order to remove the cooling oil from the generator. The arrangement of Figures 3 and 4 incorporates such an integrated pump 42, and a return line 44 is provided whereby cooling oil is returned from the scavenge pump 42 via an outlet 46, formed within the first pilot formation 28, to a known gearbox oil system.

It is also known to use gravity arrangements to return the cooling oil. Such arrangements involve using the action of gravity to drain the cooling oil to drain ports 48 provided on the generator, as illustrated in Figure 4. It is desirable for the drain ports 48 to be located at a relatively large radial distance from the axis of rotation 18 of the drive shaft 16 to maximise the inclination of the gravity drain path within the generator. In the conventional concentric mounting arrangement of Figures 1 and 2, there is one gravity drain port 38 and several scavenge pump return ports 39. In order to maximise the inclination of the gravity drain path within the generator, the drain port 38 is located at a lowermost position on the first flange 24 and at the maximum possible radial distance from the axis of rotation 18 of the drive shaft 16. As such, and as illustrated in Figure 2, the drain port 38 is located outside of the periphery of the first pilot formation 28. Hence, unlike the scavenge pump return ports 39, which are located within the first pilot formation 28, the gravity drain port 38 is not sealed from the environment by a known sealing arrangement that exists between the first pilot formation 28 and the correspondingly shaped recess 30 formed in the second flange 26. Instead a known arrangement of transfer tube and O-ring seals is required. By having the drive shaft 16 offset relative to the centreline 34 of the first flange 24 and the first pilot formation 28 it will be appreciated that the inclination of the gravity drain path within the generator can be maximised whilst maintaining the location of the drain ports 48 within the sealing interface that exists between the first pilot formation 28 and the correspondingly shaped recess 30 formed in the second flange 26, thus negating the need for the arrangement of transfer tube and O-ring seals that is required on the concentric mounting. It is noted that in order for the drain ports 48 to be located in the lowermost part of the first pilot formation 28, and thus for the lowermost part of the first pilot formation 28 to be furthest from the axis of rotation 18 of the drive shaft 16, the drive shaft 16 must be located such that its axis of rotation 18 is above the centreline 34 of the first flange 24.

The arrangement of Figures 5 and 6 incorporates a single full face drain port 48 whereas that of Figures 3 and 4 uses two drain ports 48 located side-by-side. Both of the embodiments shown in Figures 3, 4, 5 and 6 incorporate oil drain arrangements with both gravity feed and scavenge pump elements. It is recognised that an alternative embodiment could incorporate an oil drain arrangement with only a gravity feed element, and no scavenge pump element.

Although the arrangements described hereinbefore relate to the mounting of electrical generators to an aircraft engine gearbox, it will be appreciated that the mounting arrangement of the present invention may be used in a range of other applications. For example, it could be used in the mounting of pumps to motors or gearboxes, and could be used in the mounting of a gearbox to a motor.

A number of modifications and alterations may be made to the arrangement described hereinbefore without departing from the scope of the invention. For example, the first pilot formation may be concentric to the axis of rotation and the second pilot formation concentric to the centreline of the flanges, if desired. This modified embodiment would provide the same low stress and minimised radial displacement mounting arrangement of Figures 3 and 4, while maintaining a coaxial flange arrangement.

## Claims

1. A mounting arrangement for use in mounting a device (10) having a drive shaft (16) to a housing (14), the housing (14) having a flange (26) formed thereon, the mounting arrangement comprising a first flange (24) provided on the device (10) and securable to the flange (26) provided on the housing (14), the first flange (24) having a centreline, the drive shaft (16) of the device (10) having an axis of rotation (18) which is offset from the centreline.

2. An arrangement according to Claim 1, wherein the first flange (24) is of circular or substantially circular peripheral shape, the axis of rotation (18) being eccentric to the first flange (24).

3. An arrangement according to Claim 1 or Claim 2, wherein the device (10) is provided with a first projecting pilot formation (28) of generally cylindrical shape receivable within a corresponding recess (30) provided in the housing (14).

4. An arrangement according to Claim 3, wherein the first projecting pilot formation (28) is concentric with the centreline of the first flange (24) and is thus offset from the axis of rotation.

5. An arrangement according to Claim 3 or Claim 4, wherein a second projecting pilot formation (40) of generally cylindrical shape is provided, the second projecting pilot formation (40) being receivable within a corresponding recess provided in the housing (14).

6. An arrangement according to Claim 5, wherein the second projecting pilot (40) formation is co-axial with the axis of rotation (18) of the drive shaft (16).

7. An arrangement according to Claim 5 or Claim 6, wherein the second pilot formation (40) projects from within the first pilot formation (28).

8. An arrangement according to Claim 5 or Claim 6, wherein the first pilot formation (28) projects from within the second pilot formation (40).

9. An arrangement according to any of Claims 3 to 8, wherein one or more drain passages (38) open onto the first pilot formation (28).

10. An arrangement according to Claim 9, wherein the said drain passage (3 8) opens at or adjacent a point on the first pilot formation (28) furthest from the axis of rotation (18).

11. An arrangement according to any of the preceding claims, wherein a V-band retention device (36) is used to secure the flanges (24, 26) to one another.

12. A device incorporating a mounting arrangement as claimed in any of the preceding claims.

13. A device according to Claim 12, wherein the device comprises an electrical generator or other accessory for mounting on an aircraft engine gearbox.
